# EUROPEAN PATENT APPLICATION

(11) **EP 4 382 784 A1**
(43) Date of publication of application: **12.06.2024**
(21) Application number: 22211935.6
(22) Date of filing: 07.12.2022
(51) Int. Cl.: F16K 15/04, F16K 25/00, C22C 29/08, B22F 1/05, B33Y 80/00, B22F 3/11, B22F 10/10, B22F 10/18, C22C 29/06, F16C 33/32, F16C 33/34

(54) **MOVABLE STRUCTURE ELEMENT**

(71) Applicant: CERATIZIT Hard Material Solutions S.à r.l., 8232 Mamer (LU)
(72) Inventor: MAGIN, Michael, 8232 Mamer (LU); STREBLER, Philippe, 8232 Mamer (LU); RAYECK, Tom, 8232 Mamer (LU); DUFOUR-BONNEAU, Ervin, 8232 Mamer (LU)
(74) Representative: Ciesla, Dirk

(57) **Abstract**

A movable structure element (10, 11, 12, 100, 200, 300), wherein a wall (20, 21, 22, 210, 201, 301) of the movable structure element (10, 11, 12, 100, 200, 300) encloses an interior space (30, 31, 32) entirely, such that the movable structure element (10, 11, 12, 100, 200, 300) is hollow, wherein the wall (20, 21, 22, 210, 201, 301) is made from a sintered cemented carbide.

## Description

The present invention relates to a movable structure element, wherein a wall of the movable structure element encloses an interior space entirely, such that the movable structure element is hollow.

US 2006/0180209 A1 discloses a valve assembly having a valve ball. The mass of the valve ball limits the size of the valve assembly. Once the mass of the valve ball becomes too high, its inertia prohibits rapid cycling and thereby opening and closing of the valve. In order to reduce the mass of the valve ball for a given size the valve ball can be made hollow. The use of a hollow valve ball, although having a reduced mass allowing for faster cycling, has wear problems, especially when used with an abrasive fluid at high pressures and flow rates.

The objective of the present invention is to provide a movable structure element which provides a better compromise between being able to cycle faster and having a better load capacity and wear resistance under abrasive fluid contact.

The objective is solved by a movable structure element according to claim 1. Further embodiments of the invention are disclosed in the dependent claims, which can be combined freely, the specification, the embodiments and the figures enclosed.

The movable structure element has a wall which encloses an interior space entirely, such that the movable structure element is hollow, wherein the wall is made from a sintered cemented carbide. The sintered cemented carbide is a wear resistant material due its intrinsic hardness and whose relative high density and thereby inertia for a given wall thickness of the wall is counterbalanced by a mass reduction due to the interior space enclosed by the wall. The interior space is typically filled at least partly by a gas or gas mixture, e.g., air. Thus, the movable structure element has the superior wear resistance of the sintered cemented carbide and the lightness of a hollow structure which enables rapid cycling in a valve while staying true to is its original shape over a longer period of time. The latter means that a valve can operate longer without leakage. For example, for a given size and shape of the movable structure element, the wall thickness of the wall can be made smaller in comparison to the wall being made from a steel which saves weight without decreasing the wear resistance. Further, since the movable structure element is hollow due to the interior space, less of the sintered cemented carbide is needed to manufacture the movable structure element which reduces the sintering time and saves costs. Further, since the movable structure element is hollow due to the interior space, the impact forces caused by the movable structure element are reduced, which increases the lifetime of components in cyclic contact with the movable structure element and the movable structure element itself.

"Structure element" is to be understood to mean that the movable structure element has load bearing capacity under loading conditions in mechanical devices such as, e.g., valves or bearings. Thus, the movable structure element is different from a hollow powder particle or from a hollow powder-like particle.

"Movable" is to be understood to mean that the movable structure element can be moved and thereby also accelerating under forces occurring in mechanical devices such as, e.g., valves or bearings.

"Hollow" is to be understood, that the interior space may have a reinforcement structure, which however, does not fill the interior space completely, leaving space for said gas or gas mixture.

The interior space is a space deliberately designed and shaped and thereby different from the mere presence of a pore in a wall.

According to a preferred embodiment wherein the wall has a thickness of at least 1 mm. It has been found that the wall thickness of at least 1 mm yields sufficient rigidity of bearing applications.

According to a preferred embodiment of the movable structure element the wall encloses the interior space seamlessly. Thus, the wall is void of internal interfaces and thereby potential sites for crack initiation and crack propagation, which is especially important due to the intrinsic brittleness of the sintered cemented carbide.

According to a preferred embodiment of the movable structure element it has a reinforcement structure which extends within the interior space joining different parts of the wall together. The reinforcement structure has the advantage that the wall thickness of the wall can be made thinner without sacrificing load capacity and also reduces the sintering time required. The reinforcement structure subdivides the interior space into cells which are filled with gas or a gas mixture, e.g., air. The reinforcement structure is, e.g., honeycomb shaped under the formation of corresponding reinforcement walls.

According to a preferred embodiment of the movable structure element the reinforcement structure is made from the sintered cemented carbide. Thus, the same material is used for the wall and for the reinforcement which saves manufacturing costs.

According to a preferred embodiment of the movable structure the reinforcement structure is joined to the wall seamlessly. Thereby internal interfaces between the reinforcement structure and the wall are avoided which increases the load bearing capacity of the movable structure element.

According to a preferred embodiment of the movable structure element it is ball-shaped. Being ball-shape reduces stress-concentrations in the wall.

According to a preferred embodiment of the movable structure element the wall has an outer diameter in the range from 2 mm to 400 mm, preferably from 6 mm to 250 mm. This diameter range is optimal for most bearing and valve applications given that most bearings and valves comply with size standards and shape standards.

According to a preferred embodiment of the movable structure element it is a bearing element. The movable structure element is thus designed on parts of the wall and its thickness to be used in a bearing where both Hertzian pressures and centrifugal forces act on the wall.

According to a preferred embodiment of the movable structure element it is a valve element, for example a hollow valve ball. The movable structure element is thus designed on parts of the wall and its thickness to be used in a valve where it cycles rapidly under contact with a typically abrasive fluid.

According to a further embodiment of the movable structure the wall is liquid impermeable. Thus, the sintered cemented carbide has been sintered to a degree that closes pores to an extent that a liquid, e.g., water, e.g., oil, cannot enter the interior space through the wall, i.e., the wall is void of a percolating pore-network connecting the interior space with an outside surface of the movable structure element. Since the wall encloses the interior space entirely, the liquid impermeable wall prevents the liquid at all from entering the interior space from the outside of the movable structure element.

According to a preferred embodiment of the movable structure element the sintered cemented carbide has a Vickers hardness in the range from 1300 HV10 to 1800 HV10. A Vickers hardness in this range improves the wear resistance of the movable structure element.

The Vickers hardness HV10 of the sintered cemented carbide is measured according to the international standard ISO 3878:1991 ("Hardmetals - Vickers hardness test").

According to a preferred embodiment of the movable structure element the wall is additively manufactured, such that the interior space is powder-free. Being additively manufactured increases the freedom of design on parts of the wall and optionally the reinforcement structure, if present. "powder-free" means that unavoidable powder residues may be present in the interior space, e.g. when selective laser sintering of a cemented carbide powder is used to additively manufactured the wall powder residues are typically unavoidable. When material extrusion of a cemented carbide powder paste is used for additively manufacturing the wall, unavoidable powder residues are reduced to a minimum.

"powder-free" is different from deliberately leaving powder or deliberately adding powder to the interior space, e.g., in order to significantly alter damping properties of the moveable structure element.

Additive manufacturing is the preferred way to obtain the described seamless wall and/or the described reinforcement structure.

According to a preferred embodiment of the movable structure element the sintered cemented carbide has a skeleton structure made from tungsten carbide, wherein the tungsten carbide has an average grain size in the range from 0.2 µm to 1.3 µm. The average grain size of the cemented carbide in this range yields a good wear resistance in comparison to a correspondingly coarser carbide grain size.

The grain size is measured as "linear intercept length", in accordance with the international standard ISO 4499-2:2008(E). EBSD images of polished sections of the wall serve as measurement basis. The measurement methodology on such images is, for example, described in: K. P. Mingard et al., "Comparison of EBSD and conventional methods of grain size measurement of hard metals", Int. Journal of Refractory Metals & Hard Materials 27 (2009) 213-223".

According to a preferred embodiment of the movable structure element the sintered cemented carbide has: a metallic base alloy ranging from 5 to 15 weight percent, and as a remainder (tungsten carbide and unavoidable impurities).

The sintered cemented carbide has a thus a skeleton structure formed by a tungsten carbide and skeleton structure spaces filled with the metallic base alloy, e.g., a cobalt, nickel or iron base alloy. Base alloy means that the corresponding base alloy element mentioned amounts to at least 75 weight percent with respect to the base alloy composition. Preferably the sintered cemented carbide is free from cubic carbide since this improves the wear properties even further. Preferably, the metallic base alloy is a cobalt base alloy comprising nickel.

Unavoidable impurities are impurities introduced by sintering and/or pressing a corresponding green body and may also be present due to usage of recycled cemented carbide material.

Further advantages of the invention will be apparent from the following description of embodiments with reference to the accompanying figures.

The Figures show
- Fig. 1a:: in a perspective view a schematical drawing of a movable structure element according to a first embodiment;
- Fig. 1b:: in a perspective view a schematical drawing of the movable structure element according to the first embodiment revealing graphically an interior space and a wall cross-section;
- Fig. 2a:: in a perspective view a schematical drawing of a movable structure element according to a second embodiment;
- Fig. 2b:: in a perspective view a schematical drawing of the movable structure element according to the second embodiment revealing graphically an interior space and a wall cross-section;
- Fig. 3a:: in a perspective view a schematical drawing of a movable structure element according to a third embodiment;
- Fig. 3b:: in a perspective view a schematical drawing of the movable structure element according to the third embodiment revealing graphically an interior space and a wall cross-section;
- Fig. 4:: in a perspective view a schematical drawing of a movable structure element according to a fourth embodiment revealing graphically an interior space, a wall cross-section and a reinforcement structure;
- Fig. 5:: in a perspective view a schematical drawing of a movable structure element according to a fifth embodiment revealing graphically an interior space, a wall cross-section and a reinforcement structure;
- Fig. 6:: in a perspective view a schematical drawing of a movable structure element according to a sixth embodiment revealing graphically an interior space , a wall cross-section and a reinforcement structure.

### EMBODIMENTS

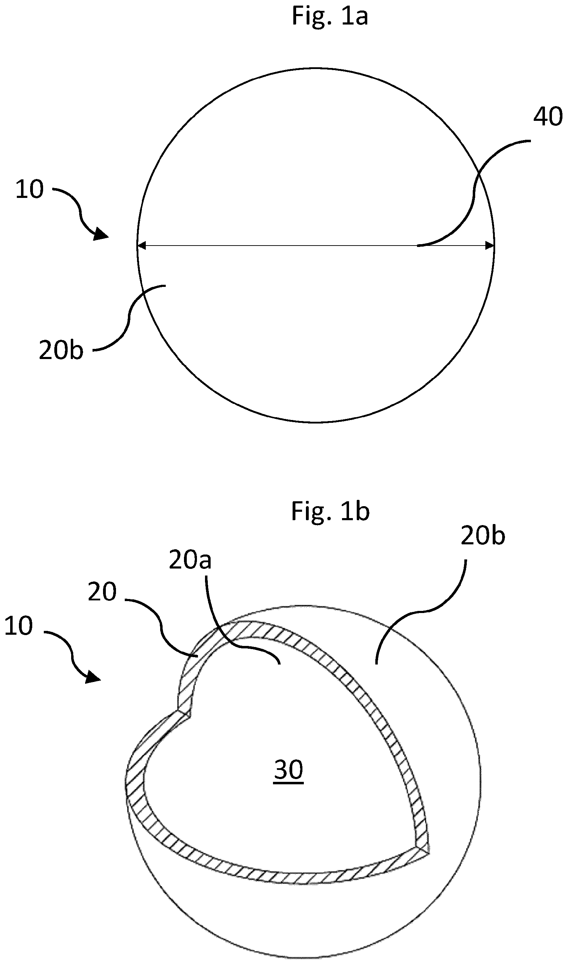

Figs. 1a and 1b show in a perspective view a schematical drawing of a movable structure element 10 according to a first embodiment. The movable structure element 10 has a wall 20 which encloses an interior space 30, as shown in Fig. 1b, where the interior space 30 and the cross-section of the wall 20 are revealed. The wall 20 is made from a sintered cemented carbide, has an inner surface 20a on parts of the interior space 30 and an outer surface 20b facing away from the interior space 30. The interior space 30 is powder-free and filled with air such that the mass of the movable structure element 10 is reduced in comparison to a solid cemented carbide element of the same shape and size as the movable structure element 10.

The wall 20 and thereby the movable structure element 10 are ball-shaped having an outer diameter 40, as depicted Fig. 1a, in the range from 2 mm to 400 mm measured on parts of the outer surface 20b.

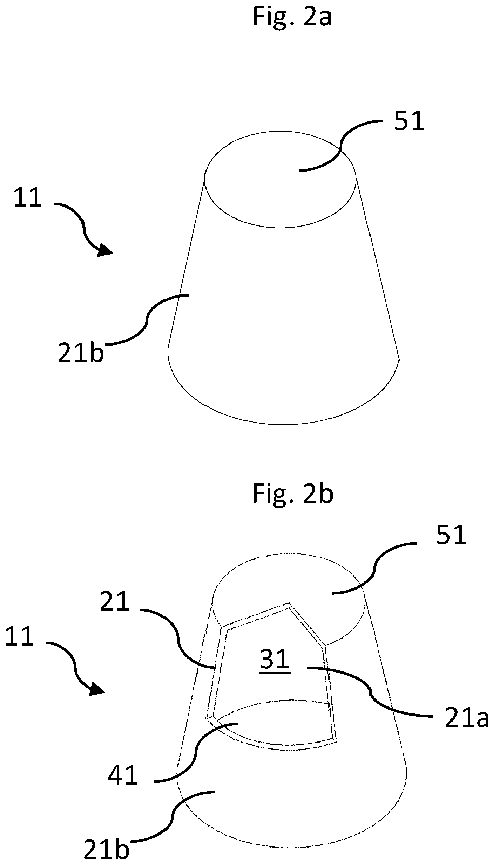

Figs. 2a and 2b show in a perspective view a schematical drawing of a movable structure element 11 according to a second embodiment. The movable structure element 11 has a wall 21 which encloses an interior space 31, as shown in Fig. 2b, where the interior space 31 and a cross-section of the wall 21 are revealed. The wall 21 is made from a sintered cemented carbide, has an inner surface 21a on parts of the interior space 31 and an outer surface 21b facing away from the interior space 31. The interior space 31 is powder-free and filled with air such that the mass of the movable structure element 11 is reduced in comparison to a solid cemented carbide element of the same shape and size as the movable structure element 11.

The wall 21 and thereby the movable structure element 11 are frustoconical with a circular bottom side 41 and a circular top side 51, wherein the diameter of the circular top side 51 is smaller than the diameter of circular bottom side 41.

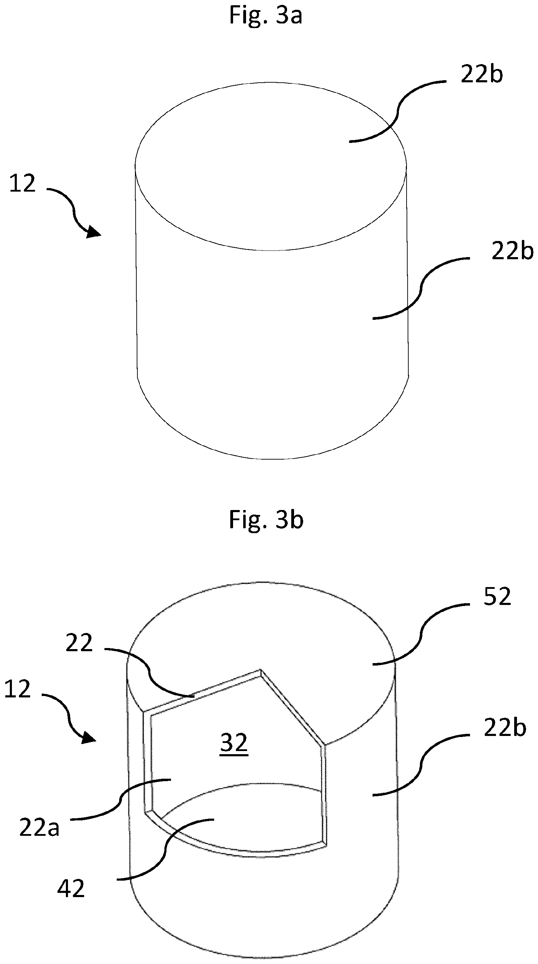

Figs. 3a and 3b show in a perspective view a schematical drawing of a movable structure element 12 according to a third embodiment. The movable structure element 12 has a wall 22 which encloses an interior space 32, as shown in Fig. 2b, where the interior space 32 and a cross-section of the wall 32 are revealed. The wall 22 is made from a sintered cemented carbide, has an inner surface 22a on parts of the interior space 32 and an outer surface 22b facing away from the interior space 32. The interior space 32 is powder-free and filled with air such that the mass of the movable structure element 12 is reduced in comparison to a solid cemented carbide element of the same shape and size as the movable structure element 12.

The wall 32 and thereby the movable structure element 12 are cylindrical with a circular bottom side 42 and a circular top side 52 of the same diameter.

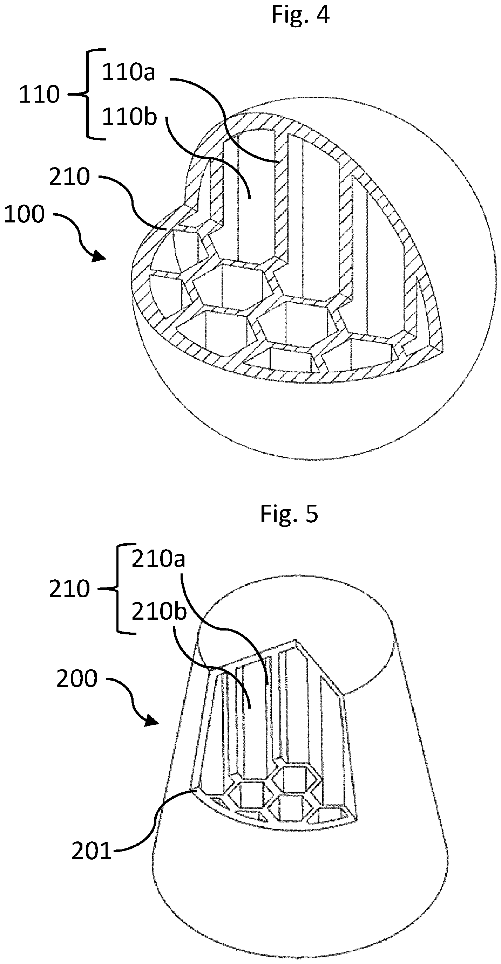

Figs. 4 shows in a perspective view a schematical drawing of a movable structure element 100 according to a fourth embodiment. The movable structure element 100 is analogous to the movable structure element 10 and has additionally a reinforcement structure 110. The interior space present without the reinforcement structure 110, i.e., the interior space 30 in Fig. 1b, is subdivided by reinforcement-walls 110a of the reinforcement structure 110 into cells 110b of the reinforcement structure 110 each filled with air and being powder-free.

The reinforcement-walls 110a are joined seamlessly to a wall 210 of the movable structure element 100, in other words, the reinforcement-walls 110a and the wall 210 form a monolithic body. The reinforcement-walls 110a and thereby the cells 110b extend into the same diameter direction of the movable structure element 100, which is thereby the direction of maximum load bearing capacity of the movable structure element 100.

The reinforcement-walls 110a and thereby the cells 110b follow a hexagonal symmetry such that the reinforcement structure 110 is honey-comb shaped; depending on the cross-section and position of the cells 110b some of the cells 110b are truncated with respect to a hexagon.

Figs. 5 shows in a perspective view a schematical drawing of a movable structure element 200 according to a fifth embodiment. The movable structure element 200 is analogous to the movable structure element 11 and has additionally a reinforcement structure 210. The interior space present without the reinforcement structure 210, i.e., the interior space 31 in Fig. 2b, is subdivided by reinforcement-walls 210a of the reinforcement structure 210 into cells 210b of the reinforcement structure 210 each filled with air and being powder-free.

The reinforcement-walls 210a are joined seamlessly to a wall 201 of the movable structure element 200, in other words, the reinforcement-walls 210a and the wall 201 form a monolithic body. The reinforcement-walls 210a and thereby the cells 210b extend into the same direction height direction of the movable structure element 200 (the height of a frustoconical body), which is thereby the direction of maximum load bearing capacity of the movable structure element 200.

The reinforcement-walls 210a and thereby the cells 210b follow a hexagonal symmetry such that the reinforcement structure 210 is honey-comb shaped; depending on the cross-section and position of the cells 210b some of the cells 210b are truncated with respect to a hexagon.

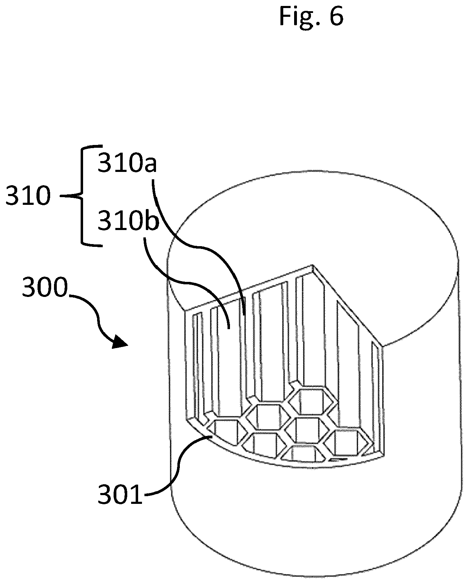

Figs. 6 shows in a perspective view a schematical drawing of a movable structure element 300 according to a sixth embodiment. The movable structure element 300 is analogous to the movable structure element 12 and has additionally a reinforcement structure 310. The interior space present without the reinforcement structure 310, i.e., the interior space 32 in Fig. 3b, is subdivided by reinforcement-walls 310a of the reinforcement structure 310 into cells 310b of the reinforcement structure 310 each filled with air and being powder-free.

The reinforcement-walls 310a are joined seamlessly to a wall 301 of the movable structure element 300, in other words, the reinforcement-walls 310a and the wall 301 form a monolithic body. The reinforcement-walls 310a and thereby the cells 310b extend into the same height direction of the movable structure element 300 (the height of a cylindrical body), which is thereby the direction of maximum load bearing capacity of the movable structure element 300.

The reinforcement-walls 310a and thereby the cells 310b follow a hexagonal symmetry such that the reinforcement structure 310 is honey-comb shaped; depending on the cross-section and position of the cells 310b some of the cells 310b are truncated with respect to a hexagon.

The sintered cemented carbide the walls 20, 21, 22, 210, 201 and 301 and the reinforcement walls 110a, 210a and 310a are made from is in each embodiment the same and has a hardness in the range from 1300 HV10 to 1800 HV10.

The sintered cemented carbide the walls 20, 21, 22, 210, 201 and 301 and the reinforcement walls 110a, 210a and 310a are made from has a skeleton structure made from tungsten carbide having an average grain size in the range from 0.2 µm to 1.3 µm.

The sintered cemented carbide the walls 20, 21, 22, 210, 201 and 301 and the reinforcement walls 110a, 210a and 310a are made from has a cobalt base alloy ranging from 5 to 15 weight percent and as a remainder (tungsten carbide and unavoidable impurities). The cobalt base alloy can comprise nickel which improves the corrosion resistance.

The walls 20, 21, 22, 210, 201, 301 are liquid impermeable since their cemented carbide has been sintered correspondingly dense.

The walls 20, 21, 22, 210, 201 and 301 and the reinforcement walls 110a, 210a and 310a have been additively manufacturing by 3D extrusion of a cemented carbide paste which has been sintered after the 3D extrusion was completed which allowed to keep the interior spaces 30, 31 and 32 and the cells 110b, 210b and 310b powder-free and to enclose them entirely by the walls 20, 21, 22, 210, 201 and 301 respectively.

The walls 20, 21, 22, 210, 201 and 301 have each a minimum thickness of 1 mm. The wall thickness is measured in a normal direction in each outer surface point of the walls 20, 21, 22, 210, 201 and 301.

The movable structure elements 10, 11, 12, 100, 200 and 300 are designed to be used as valve elements in pumps for closing and opening valve outlets and/or valve inlets but can also be used as rotating bearing elements in bearings.

The interior spaces 30, 31 and 32 and the cells 110b, 210b and 310b reduce the weight and thereby the inertia of the movable structure elements 10, 11, 12, 100, 200 and 300 respectively such that the movable structure elements 10, 11, 12, 100, 200 and 300 have a reduced inertia compared to their solid counterparts such that the movable structure elements 10, 11, 12, 100, 200 add 300 can be cycled faster under the same force exerted by a oil fluid pressure or by a restrained circular motion while they have an increased wear resistance given to the sintered cemented carbide the walls 20, 21, 22, 210, 201 and 301 and the reinforcement walls 110a, 210a and 310a are made from.

## Claims

1. A movable structure element (10, 11, 12, 100, 200, 300), wherein a
wall (20, 21, 22, 210, 201, 301) of the movable structure
element (10, 11, 12, 100, 200, 300) encloses an interior space (30, 31, 32) entirely, such that the movable structure element (10, 11, 12, 100, 200, 300) is hollow, wherein the wall (20, 21, 22, 210, 201, 301) is made from a sintered cemented carbide.

2. The movable structure element (10, 11, 12, 100, 200, 300) according to claim 1, wherein the wall (20, 21, 22, 210, 201, 301) has a thickness of at least 1 mm.

3. The movable structure element (10, 11, 12, 100, 200, 300) according to any of the preceding claims, wherein the wall (20, 21, 22, 210, 201, 301) encloses the interior space (30, 31, 32) seamlessly.

4. The movable structure element (10, 11, 12, 100, 200, 300) according to any of the preceding claims, wherein the movable structure element (10, 11, 12, 100, 200, 300) has a reinforcement structure (110, 210, 310) which extends within the interior space (30, 31, 32) joining different parts of the wall (20, 21, 22, 210, 201, 301) together.

5. The movable structure element (10, 11, 12, 100, 200, 300) according to claim 4, wherein the reinforcement structure (110, 210, 310) is made from the sintered cemented carbide.

6. The movable structure element (10, 11, 12, 100, 200, 300) according to claim 4 or 5, wherein the reinforcement structure (110, 210, 310) is joined to
the wall (20, 21, 22, 210, 201, 301) seamlessly.

7. The movable structure according to any of the preceding claims, wherein the movable structure element (10, 11, 12, 100, 200, 300) is ball-shaped.

8. The movable structure element (10, 11, 12, 100, 200, 300) according to claim 7, wherein the wall (20, 201) has an outer diameter in the range from 2 mm to 400 mm, preferably from 6 mm to 250 mm.

9. The movable structure element (10, 11, 12, 100, 200, 300) according to any of the preceding claims, wherein the movable structure element (10, 11, 12, 100, 200, 300) is a bearing element or a valve element.

10. The movable structure element (10, 11, 12, 100, 200, 300) according to any of the preceding claims, wherein the wall (20, 21, 22, 210, 201, 301) is liquid impermeable.

11. The movable structure element (10, 11, 12, 100, 200, 300) according to any of the preceding claims, wherein the sintered cemented carbide has a Vickers hardness in the range from 1300 HV10 to 1800 HV10.

12. The movable structure element (10, 11, 12, 100, 200, 300) according to any of the preceding claims, wherein the wall (20, 21, 22, 210, 201, 301) is additively manufactured, such that the interior space space (30, 31, 32) is powder-free.

13. The movable structure element (10, 11, 12, 100, 200, 300) according to any of the preceding claims, wherein the sintered cemented carbide has a skeleton structure made from tungsten carbide, wherein the tungsten carbide has an average grain size in the range from 0.2 µm to 1.3 µm.

14. The movable structure element (10, 11, 12, 100, 200, 300) according to any of the preceding claims, wherein the sintered cemented carbide has:
a metallic base alloy ranging from 5 to 15 weight percent, and
as a remainder (tungsten carbide and unavoidable impurities).
